# EUROPÄISCHE PATENTANMELDUNG

(11) **EP 1 286 181 A1**
(43) Veröffentlichungstag der Anmeldung: **26.02.2003**
(21) Anmeldenummer: 02014333.5
(22) Anmeldetag: 27.06.2002
(51) Int. Cl.: G01S 13/93, B60K 31/00, G05D 1/00

(54) **Führung von Kraftfahrzeugen**

(30) Priorität: 20.08.2001 DE 10140802
(71) Anmelder: IBEO Automobile Sensor GmbH, 22179 Hamburg (DE)
(72) Erfinder: Lages, Ulrich, Dr., 21031 Hamburg (DE)
(74) Vertreter: Manitz, Finsterwald & Partner GbR

(57) **Zusammenfassung**

Die Erfindung betrifft ein Verfahren zur Führung von Kraftfahrzeugen, bei dem mittels wenigstens eines an einem Fahrzeug angebrachten optoelektronischen Sensors der in Fahrtrichtung vor dem Fahrzeug liegende Vorbereich und bezogen auf die Fahrzeuggeschwindigkeit im wesentlichen gleichzeitig wenigstens ein seitlich des Fahrzeugs gelegener Seitenbereich abgetastet wird, und das Fahrzeug in Abhängigkeit von durch die Abtastung des Vorbereiches und des Seitenbereiches gewonnenen Informationen geführt wird.

## Beschreibung

Die Erfindung betrifft ein Verfahren zur Führung von Kraftfahrzeugen.

Bei einem voll- oder teilautomatischen Fahrbetrieb von Fahrzeugen ist es erforderlich, Informationen über die Umgebung des Fahrzeugs zu erhalten, um beispielsweise einen Folgefahrt- oder Shuttlebetriebsmodus zu realisieren, bei dem eine Mehrzahl von Fahrzeugen z.B. zum Transport von Personen oder Gegenständen einen Fahrzeugverband bilden.

Aufgabe der Erfindung ist es, eine Möglichkeit zur Führung von Fahrzeugen zu schaffen, mit der auf möglichst einfache Weise eine möglichst große Menge an Informationen über die Fahrzeugumgebung gewonnen werden kann.

Die Lösung dieser Aufgabe erfolgt durch die Merkmale des Anspruchs 1 und insbesondere dadurch, daß bei dem Verfahren mittels wenigstens eines an einem Fahrzeug angebrachten optoelektronischen Sensors der in Fahrtrichtung vor dem Fahrzeug liegende Vorbereich und bezogen auf die Fahrzeuggeschwindigkeit im wesentlichen gleichzeitig wenigstens ein seitlich des Fahrzeugs gelegener Seitenbereich abgetastet wird und das Fahrzeug in Abhängigkeit von durch die Abtastung des Vorbereiches und des Seitenbereiches gewonnenen Informationen geführt wird.

Erfindungsgemäß wird mit Hilfe eines fahrzeugfesten optoelektronischen Sensors zum einen der in Fahrtrichtung vor dem Fahrzeug liegende Vorbereich und zum anderen zumindest einer der Seitenbereiche des Fahrzeugs abgetastet. Bezogen auf die Fahrzeuggeschwindigkeit erfolgt dabei die Abtastung des Vorbereiches und des Seitenbereiches im wesentlichen gleichzeitig, d.h. die gegebenenfalls vorhandene Zeitspanne zwischen der Abtastung des Vorbereiches einerseits und der Abtastung des Seitenbereiches andererseits ist derart kurz, daß die vom fahrenden Fahrzeug während dieser Zeitspanne zurückgelegte Wegstrecke für die Zwecke der Führung des Fahrzeugs praktisch vernachlässigt werden kann.

Die Führung des Fahrzeugs erfolgt erfindungsgemäß in Abhängigkeit von sowohl durch die Abtastung des Vorbereiches als auch durch die Abtastung des Seitenbereiches gewonnenen Informationen, d.h. es kann sowohl das Geschehen vor dem Fahrzeug als auch seitlich des Fahrzeugs berücksichtigt werden. Hierdurch können eine Vielzahl von bei der Fahrzeugführung benötigten Funktionen gleichzeitig ausgeführt werden.

Vorzugsweise werden mittels des optoelektronischen Sensors Bereiche zu beiden Seiten des Fahrzeugs abgetastet, wobei die Seitenabtastung derart umfassend erfolgen kann, daß jeweils Informationen praktisch aus dem gesamten Halbraum seitlich des Fahrzeugs durch die Abtastung gewonnen werden. Ferner können erfindungsgemäß auch mehrere optoelektronische Sensoren am Fahrzeug angebracht und gemeinsam zur Fahrzeugführung eingesetzt werden, wobei sich deren Sichtbereiche überlappen können.

Die Führung des Fahrzeugs in Abhängigkeit von den durch die Abtastung gewonnenen Informationen erfolgt vorzugsweise unter Verwendung einer rechnergestützten Steuereinrichtung, von welcher der Sensor einen Bestandteil bilden oder die als von dem Sensor baulich, räumlich und/oder organisatorisch getrennte Einrichtung vorliegen kann, und einer spezielle Algorithmen umfassenden Verarbeitungssoftware. Mittels der Steuereinrichtung erfolgt eine Verarbeitung der von dem Sensor gelieferten Rohdaten, der gegebenenfalls eine Vorverarbeitung der Rohdaten innerhalb des Sensors oder in einer dem Sensor zugeordneten Vorverarbeitungsstufe vorgeschaltet sein kann. Die Steuereinrichtung kann derart ausgebildet sein, daß sie entweder direkt oder über einen zusätzlichen Fahrzeugrechner auf der Grundlage von aus den Rohdaten gewonnenen Steuerdaten in den Fahrzeugbetrieb eingreifen kann, um das Fahrzeug in der jeweils vorgegebenen oder gewünschten Art und Weise zu führen.

In einer bevorzugten praktischen Ausgestaltung der Erfindung wird als optoelektronischer Sensor ein Laserscanner verwendet, insbesondere ein Entfernungen und Winkel messender Laserscanner, der in zumindest einer Abtastebene zu jedem Entfernungswert einen auf eine Sensorachse bezogenen Winkelwert liefert.

Ein derartiger Laserscanner kann in einer oder mehreren Abtastebenen einen Laserstrahl aussenden und mit diesem Abtaststrahl wiederholend einen vorgegebenen, grundsätzlich beliebig großen Winkelbereich von bis zu 360° überstreichen. Die Entfernung zu den die ausgesandten Abtaststrahlen reflektierenden Objekten wird dabei vorzugsweise nach dem Licht- oder Pulslaufzeitverfahren bestimmt. Die Abtaststrahlung kann sowohl im für das menschliche Auge sichtbaren Wellenlängenbereich als auch außerhalb dieses Bereiches liegen.

Eine weitere Ausführungsform der Erfindung schlägt vor, daß der Vorbereich und der Seitenbereich in einer Höhe abgetastet werden, die etwa in dem Bereich zwischen den von der Fahrbahn einerseits und der Fahrzeugunterseite andererseits definierten Ebenen liegt.

Bevorzugt wird wenigstens ein an der Unterseite des Fahrzeugs und insbesondere bezogen auf die Fahrzeugbreite etwa mittig angebrachter Sensor verwendet. Durch die Verwendung eines derartigen Sensors wird die Bodenfreiheit des Fahrzeugs ausgenutzt und zwischen den Fahrzeugreifen hindurch die Umgebung des Fahrzeugs abgetastet.

Bevorzugt wird ein Sensor verwendet, der im Bereich der Vorderachse und insbesondere unmittelbar hinter der Vorderachse des Fahrzeugs angebracht ist. Vorzugsweise wird der Sensor in einer "Überkopf'-Anordnung verwendet, in welcher er derart am Fahrzeug montiert ist, daß die sich drehende, z. B. in Form eines Prismas oder Spiegels vorgesehene Strahlungsumlenkeinrichtung sich an der tiefsten Stelle befindet.

Die Informationen, die durch die Abtastung des Vorbereiches und des Seitenbereiches gewonnen werden, können von mannigfaltiger Art sein.

So können beispielsweise Informationen über das Vorhandensein oder Nichtvorhandensein voraus- und/oder nebenherfahrender Fahrzeuge gewonnen werden. Ferner ist es möglich, Informationen über das Vorhandensein oder Nichtvorhandensein von aus dem Seitenbereich in den Vorbereich eindringenden Fahrzeugen zu gewinnen. Auf diese Weise kann beispielsweise das Einfädeln von Fahrzeugen in den eigenen Fahrstreifen erkannt werden.

Des weiteren ist bevorzugt vorgesehen, daß Informationen über die Lage des Fahrzeugs relativ zu voraus- und/oder nebenherfahrenden Fahrzeugen gewonnen werden. Diese Informationen können beispielsweise den Abstand zu den anderen Fahrzeugen, einen Seitenversatz bezüglich eines vorausfahrenden Fahrzeugs und/oder den Winkel zwischen der eigenen Fahrzeuglängsachse und der Längsachse eines vorausfahrenden Fahrzeugs umfassen.

Ferner kann erfindungsgemäß vorgesehen sein, daß Informationen über die Geschwindigkeit des Fahrzeugs relativ zu voraus- und/oder nebenherfahrenden Fahrzeugen gewonnen werden.

Außerdem wird vorgeschlagen, Informationen über die Lage des Fahrzeugs relativ zu die Fahrbahn begrenzenden oder die Fahrbahnbegrenzung wiedergebenden Begrenzungsobjekten zu gewinnen. Während die Fahrbahn begrenzende Objekte - z. B. für einen Shuttle-Betrieb an Flughäfen - direkt am Fahrbahnrand angeordnet sind, handelt es sich bei den die Fahrbahnbegrenzung wiedergebenden Objekten beispielsweise um Pfähle, Bäume oder Sträucher, welche die Fahrbahn nicht direkt begrenzen, sondern dem Fahrbahnverlauf in einem zumindest im wesentlichen konstanten Abstand zur eigentlichen Fahrbahnbegrenzung folgen.

Dabei können die Informationen beispielsweise den seitlichen Abstand des Fahrzeugs zur Fahrbahnbegrenzung und/oder den Winkel zwischen der Fahrbahnbegrenzung und der Fahrzeuglängsachse betreffen. Dieser Winkel wird auch als Gierwinkel bezeichnet. Gemäß einer weiteren Variante der Erfindung können die Informationen die Geschwindigkeit des Fahrzeugs relativ zu die Fahrbahn begrenzenden oder die Fahrbahnbegrenzung wiedergebenden Begrenzungsobjekten betreffen.

In einer weiteren bevorzugten Ausgestaltung des erfindungsgemäßen Verfahrens wird das Fahrzeug innerhalb eines zumindest zum Teil von voll- oder teilautomatisch geführten oder selbstfahrenden Fahrzeugen gebildeten Fahrzeugverbandes geführt. Dies erfolgt insbesondere in einem Folgefahrt- oder Shuttlebetriebsmodus.

Ferner ist bevorzugt vorgesehen, daß das Fahrzeug zum Einfädeln in einen und/oder zum Ausscheren aus einem Fahrzeugverband geführt wird, der zumindest zum Teil von voll- oder teilautomatisch geführten oder selbstfahrenden Fahrzeugen gebildet wird.

Alternativ oder zusätzlich kann vorgesehen sein, daß das Fahrzeug zur Durchführung von Fahrstreifenwechseln, Einfahrtvorgängen, Ausfahrtvorgängen und/oder Abbiegevorgängen geführt wird.

Ferner kann vorgesehen sein, daß das Fahrzeug auf einer Rundfahrstrecke geführt wird, insbesondere zum Transport von Personen und/oder Gegenständen.

Erfindungsgemäß können die durch die Abtastung gewonnenen Informationen in mannigfaltiger Art und Weise untersucht werden, wobei dies insbesondere unter Verwendung einer Steuereinrichtung und gegebenenfalls zusätzlich einer Vorverarbeitungsstufe des Sensors erfolgt, wie sie eingangs erläutert wurden.

Beispielsweise können erfindungsgemäß die gewonnenen Informationen daraufhin untersucht werden, ob sich im Vorbereich Hindernisse befinden. Bei diesen Hindernissen kann es sich sowohl um Personen als auch um Gegenstände handeln. Vorzugsweise wird die Geschwindigkeit des Fahrzeugs zu im Vorbereich befindlichen Hindernissen bestimmt.

Ferner können die gewonnenen Informationen daraufhin untersucht werden, ob sich im Vorbereich und/oder im Seitenbereich die Fahrbahn begrenzende oder die Fahrbahnbegrenzung wiedergebende Begrenzungsobjekte befinden.

In einer bevorzugten Ausführung des erfindungsgemäßen Verfahrens wird anhand dieser Begrenzungsobjekte der Fahrbahnverlauf bestimmt, und zwar insbesondere einschließlich von Ein- und/oder Ausfädelbereichen, von Ein- und/oder Ausfahrten, von Kurvenein- und/oder -ausfahrten und/oder von Kreuzungsbereichen.

In einer weiteren bevorzugten Variante der Erfindung werden die gewonnenen Informationen daraufhin untersucht, ob sich im Vorbereich und/oder im Seitenbereich bekannte Objekte befinden. Die Fahrzeugumgebung wird dabei gewissermaßen nach bekannten Objekten abgesucht.

Als bekannte Objekt können beispielsweise an Fahrzeugen angebrachte Identifikationsobjekte vorgesehen werden. Das jeweilige Fahrzeug kann dadurch z.B. ein vorausfahrendes Fahrzeug als solches erkennen. Die fahrzeugfesten Identifikationsobjekte können sich beispielsweise durch eine bekannte Anbauposition, Anordnung, Form, Größe und/oder Beschaffenheit, insbesondere Reflektivität, auszeichnen.

Ferner können als bekannte Objekte die Fahrbahn begrenzende oder die Fahrbahnbegrenzung wiedergebende Begrenzungsobjekte vorgesehen sein, die beispielsweise aufgrund ihrer Position, Anordnung, Form, Größe und/oder Beschaffenheit, insbesondere Reflektivität, als bekannte Objekte erkennbar sind.

Gemäß einer besonders bevorzugten Ausführung des erfindungsgemäßen Verfahrens werden mit den bekannten Objekten Informationen codiert, die für die Fahrzeugführung und beispielsweise zur Positionsbestimmung des Fahrzeugs und/oder zur Fahrzeugpositionierung vérwendet werden können. Bei der Abtastung der Fahrzeugumgebung werden diese Objekte nicht nur erkannt, sondern es werden außerdem die mittels dieser Objekte codierten Informationen, d.h. die durch die bekannten Objekte dargestellten Codes gelesen.

Die Codierung kann beispielsweise durch die Position, Anordnung, Form, Größe und/oder Beschaffenheit, insbesondere Reflektivität, der bekannten Objekte erfolgen. Dabei können sich z.B. mehrere bekannte Objekte, die eine zur Codierung einer Information vorgesehene Gruppe bilden, hinsichtlich wenigstens einer Eigenschaft derart voneinander unterscheiden, daß die Information durch die Art und Weise, wie die Unterschiede beschaffen sind, codiert wird.

Vorzugsweise erfolgt diese Informationscodierung durch ortsfeste Referenzobjekte. Die zur Informationscodierung dienenden ortsfesten Referenzobjekte, die auch als "Landmarken" bezeichnet werden, können gleichzeitig als die Fahrbahn begrenzende oder die Fahrbahnbegrenzung wiedergebende Begrenzungsobjekte verwendet werden.

Es ist auch möglich, die Fahrbahn begrenzende oder die Fahrbahnbegrenzung wiedergebende Begrenzungsobjekte als Träger für zur Informationscodierung dienende Referenzobjekte zu verwenden.

Das erfindungsgemäße Verfahren kann eine dem Normalbetrieb vorausgehende Einlernfahrt umfassen, mit welcher entlang einer Fahrstrecke vorgesehene und insbesondere von bekannten Referenzobjekten gebildete Codes eingelernt werden. Einer Steuereinrichtung des Fahrzeugs, wie sie beispielsweise eingangs erläutert wurde, kann auf diese Weise beigebracht werden, welche Codes entlang der Fahrstrecke vorhanden sind.

Gemäß einer weiteren bevorzugen Variante der Erfindung werden mittels der bekannten Objekte Informationen über die Geschwindigkeit und/oder die Lage des Fahrzeugs relativ zu vorausfahrenden Fahrzeugen gewonnen. Diese Informationen können beispielsweise den Abstand zwischen den Fahrzeugen, einen gegebenenfalls vorhandenen Seitenversatz zwischen den Fahrzeugen und/oder den Winkel zwischen den Fahrzeuglängsachsen umfassen. Bevorzugt werden diese Informationen mit Hilfe von fahrzeugfesten Identifikationsobjekten gewonnen, wie sie beispielsweise vorstehend erläutert wurden.

In einer weiteren bevorzugten Variante der Erfindung ist vorgesehen, daß mittels der bekannten Objekte Informationen über in Fahrtrichtung vor dem Fahrzeug liegende Steigungen und/oder Gefälle gewonnen werden. Hierzu werden insbesondere wiederum die fahrzeugfesten Identifikationsobjekt verwendet. Das Erkennen von vor dem Fahrzeug liegenden Steigungen und/oder Gefällen kann gemäß einer bevorzugten Ausführung des erfindungsgemäßen Verfahrens dadurch erfolgen, daß ein aus dem Sichtbereich des Sensors nach oben verschwindendes fahrzeugfestes Identifikationsobjekt als Steigung bzw. ein nach unten verschwindendes fahrzeugfestes Identifikationsobjekt als Gefälle gewertet wird. Das Verhalten vorausfahrender Fahrzeuge wird auf diese Weise dazu ausgenutzt, Informationen über den Fahrbahnverlauf zu erhalten. Alternativ kann auch ohne vor dem Fahrzeug befindliche Objekte eine Steigung dadurch erkannt werden, daß bei bekannter Fahrstrecke und bekannter Position des Fahrzeugs auf dieser Strecke bzw. auf diesem Kurs ein vor dem Fahrzeug liegendes, von dem Sensor erfaßtes Objekt nur die Fahrbahn selbst sein kann.

Ferner ist erfindungsgemäß vorzugsweise vorgesehen, daß mittels der bekannten Objekte die Position des Fahrzeugs bestimmt wird, und zwar bevorzugt bezüglich eines ortsfesten Koordinatensystems. Bei den bekannten Objekten für diese Positionsbestimmung handelt es sich vorzugsweise um ortsfeste Referenzobjekte, wie sie z.B. vorstehend erläutert wurden. Hierdurch können die entlang einer Fahrstrecke vorgesehenen Referenzobjekte dazu verwendet werden, die Fahrzeugposition auf der Fahrstrecke zu bestimmen.

Eine Positionsbestimmung zwischen zwei bekannten Objekten kann gemäß einer bevorzugten Variante der Erfindung dadurch erfolgen, daß die Anzahl der Umdrehungen zumindest eines der Fahrzeugräder, insbesondere eines der nicht-angetriebenen Räder, seit dem jeweils ersten bekannten Objekt verwendet wird. Auf diese Weise kann auch zwischen diskreten, entlang einer Fahrstrecke verteilt angeordneten ortsfesten Referenzobjekten zu jedem Zeitpunkt die Fahrzeugposition exakt ermittelt werden.

In einer weiteren Variante der Erfindung können die bekannten Objekte, insbesondere ortsfeste Referenzobjekte, auch dazu dienen, das Fahrzeug gezielt an einem bestimmten Ort oder innerhalb eines vorgegebenen Bereiches zu positionieren. Dabei kann sich das Fahrzeug an den bekannten Objekten derart orientieren, daß es in eine vorgegebene Relativposition zu den bekannten Objekten geführt wird. Von besonderem Vorteil ist eine derartige Fahrzeugpositionierung beispielsweise an Haltestellen- und/oder Bahnsteigbereichen, an denen z.B. Gegenstände aus- oder eingeladen werden bzw. der Ein- und Ausstieg von Passagieren erfolgt, und/oder Ladestationen zum Aufladen gegebenenfalls vorhandener Fahrzeugbatterien.

Weitere Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung näher erläutert. Es zeigen:
- Fig. 1: eine schematische Seitenansicht eines mit einem optoelektronischen Sensor versehenen Fahrzeugs zur Durchführung des erfindungsgemäßen Verfahrens, und
- Fig. 2: in einer Draufsicht ein Beispiel für eine Fahrsituation mit gemäß dem erfindungsgemäßen Verfahren geführten Fahrzeugen.

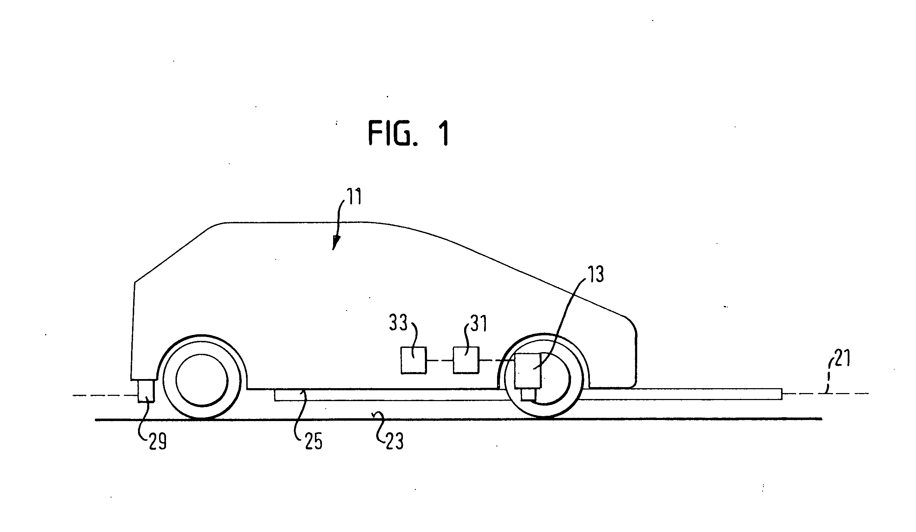

Fig. 1 zeigt ein auf einer Fahrbahn 23 stehendes Fahrzeug 11, das mit einem optoelektronischen Sensor 13 versehen ist, bei dem es sich um einen Laserscanner handelt, wie er beispielsweise im Einleitungsteil beschrieben wurde und mit dem Entfernungen sowie für jede Entfernung der Winkel bezogen auf eine Sensorachse gemessen werden können.

Der Sensor 13 ist bezogen auf die Fahrzeugbreite mittig unterhalb des Fahrzeugs 11 angebracht, und zwar unmittelbar hinter der Vorderachse. Der Abtast- oder Scankopf des Laserscanners 13 ragt in den Zwischenraum zwischen der Fahrbahn 23 und der Fahrzeugunterseite 25 hinein. Die auch als Abtaststrahlen bezeichneten Laserstrahlen werden in einer horizontalen Abtastebene 21 ausgesandt, die näher an der Fahrzeugunterseite 25 als an der Fahrbahn 23 liegt.

Die Höhe der Abtastebene 21 entspricht der Anbauhöhe eines am hinteren Fahrzeugende angebrachten Identifikationsobjekts 29, bei dem es sich einfach um ein Blech mit gezielt vorgegebenen Eigenschaften handeln kann. Das Identifikationsblech 29 zeichnet sich beispielsweise neben seiner Anbauposition am Fahrzeug 11 durch seine Form, seine Größe und/oder seine Beschaffenheit aus. Insbesondere besitzt das Blech 29 vorgegebene Reflektivitätseigenschaften, die sich von denen der Fahrzeugrückseite zumindest im das Blech 29 umgebenden Bereich unterscheiden.

Der Sensor 13 ist mit einer Steuereinrichtung 31 verbunden, die zur Beund Verarbeitung der von dem Sensor 13 gelieferten Rohdaten dient. Gegebenenfalls kann dem Sensor 13 eine zusätzliche Vorverarbeitungsstufe zugeordnet sein, in der bestimmte Operationen an den Rohdaten vorgenommen werden können. Mittels einer in der Steuereinrichtung 31 ablaufenden und spezielle Algorithmen umfassenden Verarbeitungs- und Auswertesoftware werden für einen mit der Steuereinrichtung 31 kommunizierenden Fahrzeugrechner 33 Daten bereitgestellt, auf deren Grundlage der Fahrzeugrechner 33 in den Fahrzeugbetrieb eingreifen und auf diese Weise das Fahrzeug 11 führen kann.

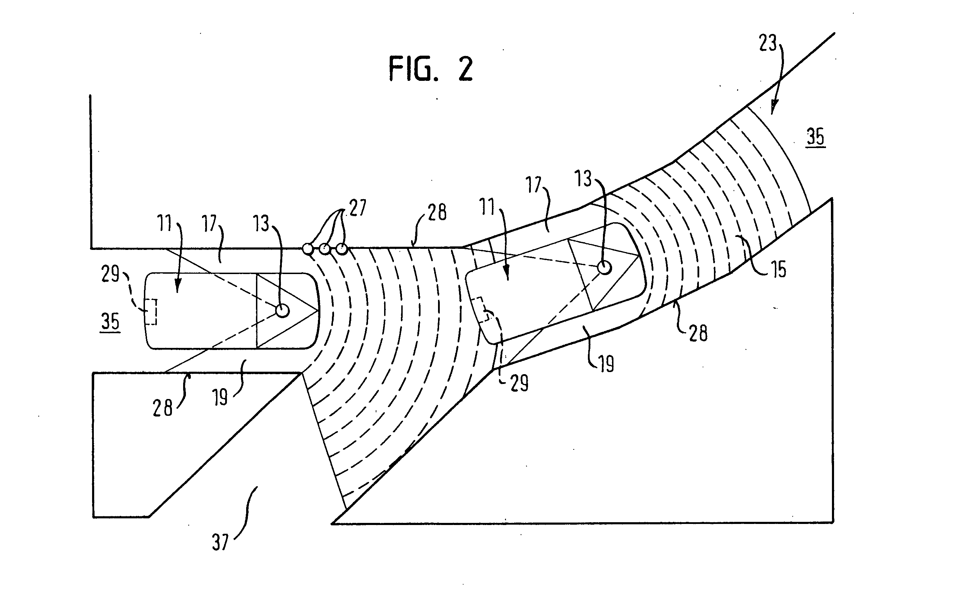

Das rein beispielhafte Fahrszenario gemäß Fig. 2 zeigt zwei gemäß einem erfindungsgemäßen Verfahren geführte Fahrzeuge 11 auf einem Fahrstreifen 35. Jedes Fahrzeug 11 ist mit einem Laserscanner 13 versehen, der in einer horizontalen Abtastebene, wie sie anhand von Fig. 1 erläutert wurde, einen bezogen auf die Fahrzeuglängsachse symmetrischen Winkelbereich von mehr als 270° und bis zu 360° abtastet. Dabei erfolgt jeweils eine vollständige Abtastung des vor dem Sensor 13 und damit vor dem Fahrzeug 11 liegenden Halbraumes oder Vorbereiches 15 sowie eine Abtastung der beiden seitlich des Fahrzeugs 11 gelegenen Seitenbereiche 17, 19. Lediglich nach hinten kann der Sensor 13 aufgrund des Identifikationsblechs 29 nicht "blicken".

Die Begrenzung des Fahrstreifens 35 erfolgt beidseitig mittels einer durchgehenden und derart erhöhten Fahrbahn- oder Fahrstreifenbegrenzung 28, daß die die in Bodennähe verlaufende Abtastebene 21 (vgl. Fig. 1) bildenden Abtaststrahlen des Sensors 13 von der Fahrstreifenbegrenzung 28 reflektiert werden. In einen die Fahrstreifenbegrenzung 28 unterbrechenden Einfahrtbereich 37 dagegen kann der Sensor 13 hineinblicken, wie es in Fig. 2 am Beispiel des hinteren Fahrzeugs 11 dargestellt ist.

Ferner sind in Fig. 2 an der in Fahrtrichtung linken Begrenzung des Fahrstreifens 35 ortsfeste Referenzobjekte 27 dargestellt, bei denen es sich beispielsweise um Pfosten oder Pfähle handelt, welche die Fahrstreifenbegrenzung 28 unterbrechen. Die Referenzobjekte 27 dienen insbesondere zur Positionsbestimmung des Fahrzeugs 11 auf der Fahrstrecke sowie zur Fahrzeugpositionierung. Die Referenzobjekte 27 zeichnen sich durch bestimmte vorgegebene Eigenschaften auf, anhand derer sie vom Fahrzeug 11 bzw. der Steuereinrichtung 31 (vgl. Fig. 1) als bekannte Objekte erkannt werden können. Erkannt werden die Referenzobjekte 27 beispielsweise aufgrund ihrer Position, ihrer Anordnung, ihrer Form, ihrer Größe und/oder ihrer Beschaffenheit, wobei insbesondere die Reflektivitätseigenschaften der Referenzobjekt 27 gezielt derart vorgegeben werden können, daß sich die Referenzobjekte 27 in für das Fahrzeug 11 bzw. die Steuereinrichtung 31 erkennbarer Weise von der Umgebung abheben.

Mit dem am Fahrzeug 11 angebrachten und erfindungsgemäß betriebenen Sensor 13 kann eine Vielzahl von Funktionen, die für eine vollautomatische oder teilautomatische Fahrzeugführung erforderlich sind oder gewünscht werden, gleichzeitig erfüllt werden. Erfindungsgemäß braucht lediglich ein einziger derartiger Multifunktionssensor vorgesehen zu werden, um eine Fahrzeugführung zu ermöglichen, die allen für die Praxis wichtigen Anforderungen und insbesondere auch allen relevanten Sicherheitsanforderungen gerecht wird. Alternativ können aber auch mehrere derartige Sensoren 13 an einem Fahrzeug 11 verwendet und gemeinsam im Rahmen des erfindungsgemäßen Verfahrens eingesetzt werden.

Im folgenden werden beispielhaft einige Aufgaben beschrieben, die bei einer voll- oder teilautomatischen Fahrzeugführung mit Hilfe eines oder mehrerer erfindungsgemäß betriebener Sensoren 13 gleichzeitig erfüllt werden können.

Das erfindungsgemäße Verfahren kann zur Spurregelung eingesetzt werden. Der Sensor 13 ist in der Lage, in den Seitenbereichen 17, 19 zwischen den Vorderrädern und Hinterrädern des Fahrzeugs 11 hindurch die Fahrbahnbegrenzung 28 über einen großen Winkelbereich zu vermessen. Damit kann der seitliche Abstand des Fahrzeugs 11 zur Fahrbahnbegrenzung 28 an beiden Seiten des Fahrzeugs 11 und gleichzeitig die Winkellage des Fahrzeugs 11, d.h. dessen Gierwinkel, relativ zur Fahrbahnbegrenzung 28 ermittelt werden. Die Bestimmung der Seitenabstände ist insbesondere von Bedeutung in Einfahrt- und Einfädelbereichen, im Bereich von Abzweigungen oder von Weichen sowie an Kreuzungen. Durch die gleichzeitige Bestimmung der Seitenabstände und der Winkellage zusätzlich zu dem Abstand zu einem vorausfahrenden Fahrzeug kann ein Einfädeln des Fahrzeugs 11 in einen sich in Bewegung befindlichen Fahrzeugverband ermöglicht werden. Ferner können durch Abtasten der Seitenbereiche 17, 19 sich in den Fahrzeugverband einfädelnde Fahrzeuge frühzeitig erkannt und beispielsweise bei der Regelung der Fahrzeuggeschwindigkeit berücksichtigt werden. Auf diese Weise kann mit der Erfindung ein kooperatives Verhalten aller Fahrzeuge untereinander realisiert werden.

Ferner kann mit der Erfindung ein Folgefahrt- oder Shuttlebetriebsmodus realisiert werden. Die für den Folgefahrt- bzw. Shuttlebetrieb zugelassenen Fahrzeuge können im hinteren Bereich mit einem fahrzeugfesten Identifikationsobjekt 29 z.B. in Form eines Reflexionsbleches mit vorgegebener Form, Größe und Reflektivität ausgestattet sein, wie es z.B. vorstehend anhand von Fig. 1 erläutert wurde. Das Identifikationsblech 29 wird von dem Sensor 13 eines nachfolgenden Fahrzeugs hinsichtlich Abstand, Breite und Winkellage vermessen, wobei die Reflektivität des Blechs 29 derart gewählt wird, daß es sich in für den Sensor 13 bzw. die Steuereinrichtung 31 sicher erkennbarer Weise von den umgebenden Fahrzeugbereichen abhebt. Bei Verwendung einheitlicher Identifikationsobjekte 29 kann aus der auf diese Weise ermittelten Relativlage zum vorausfahrenden Fahrzeug der Abstand zwischen den Fahrzeugen, die relative Winkellage, d.h. der Winkel zwischen den Längsachsen der Fahrzeuge, der Seitenversatz zwischen den Fahrzeugen sowie die Relativgeschwindigkeit zwischen den Fahrzeugen ermittelt werden. Aus dem Vorhandensein eines von Null verschiedenen Winkels zwischen den Längsachsen der Fahrzeuge kann beispielsweise auf eine Kurvenfahrt geschlossen werden. Aus der Detektion eines Seitenversatzes kann z.B. darauf geschlossen werden, daß sich das eine Fahrzeug näher an der Fahrbahnbegrenzung 28 befindet als das andere Fahrzeug. Die Relativgeschwindigkeit kann aus mehreren aufeinanderfolgenden Abtastvorgängen ermittelt werden. Durch einen Vergleich der Relativgeschwindigkeit mit der Eigengeschwindigkeit können z.B. stehende Fahrzeuge im Vorbereich 15 erkannt werden.

Aufgrund der ununterbrochenen Abtastung des Vorbereiches 15 ermöglicht die Erfindung außerdem die Erkennung von Hindernissen auf der Fahrbahn 23, wobei sowohl stehende als auch sich bewegende Hindernisse detektiert werden können. Mit Hilfe einer geeigneten Objekterkennung durch den Sensor 13 bzw. die Steuereinrichtung 31 kann beispielsweise zwischen Gegenständen und Personen innerhalb des von dem Vorbereich 15 und den Seitenbereichen 17 gebildeten Überwachungsbereiches unterschieden werden. In einem voll- oder teilautomatischen Fahrzeugführungsmodus kann hierdurch auf die jeweiligen Hindernisse in angemessener Weise reagiert werden.

Die Erfindung ermöglicht ferner einen Vorausschau-Modus, der insbesondere dann zur Anwendung kommt, wenn sich vor dem Fahrzeug 11 keine weiteren Fahrzeuge befinden. In diesem Fall kann der Sensor 13 aufgrund seiner großen Reichweite eine Vorfeldüberwachung durchführen und den Fahrbahn- oder Fahrstreifenverlauf durch Detektion der Fahrbahnbegrenzung 28 vorausschauend erkennen. Hierdurch können z.B. Ein- und Ausfädelbereiche, Ein- und Ausfahrten, Kurvenein- und -ausfahrten sowie Kreuzungsbereiche frühzeitig erkannt und bei der Fahrzeugführung berücksichtigt werden.

Die Erfindung gestattet es des weiteren, vor dem Fahrzeug 11 liegende Steigungen und Gefälle als solche zu erkennen. Insbesondere wird dies durch die gleichzeitig zur seitlichen Abtastung erfolgende, permanente Abtastung des Vorbereiches 15 in Verbindung mit der hohen Winkelauflösung und der hohen Entfernungsmeßgenauigkeit des Sensors 13 ermöglicht. Gefälle können beispielsweise dadurch erkannt werden, daß die Fahrbahnbegrenzung 28 ab einer bestimmten Entfernung nicht mehr detektiert werden kann. Sofern vorausfahrende Fahrzeuge vorhanden sind, können Steigungen und Gefälle z.B. dadurch erkannt werden, daß das vorausfahrende Fahrzeug den Sichtbereich des Sensors 13 nach oben verläßt, was als eine Steigung gewertet wird, oder die Abtaststrahlen des Sensors 13 nicht mehr von einem am vorausfahrenden Fahrzeug angebrachten Identifikationsobjekt 29, wie es beispielsweise vorstehend erläutert wurde, sondern von anderen Bereichen des vorausfahrenden Fahrzeugs reflektiert werden, was als ein Gefälle gewertet wird.

Durch die Verwendung ortsfester Referenzobjekte 27, die an der Fahrstrecke angeordnet sind und auch als Landmarken bezeichnet werden können, ermöglicht die Erfindung ferner die Bestimmung der Fahrzeugposition.

So kann beispielsweise eine durchgehende Fahrbahnbegrenzung stellenweise durch ortsfeste Referenzobjekte unterbrochen oder ersetzt werden, bei denen es sich beispielsweise um Pfähle oder Pfosten unterschiedlicher Breite bzw. um abschnittsweise vorgesehene Begrenzungsobjekte unterschiedlicher Länge handeln kann. Indem diese Referenzobjekte gezielt mit bestimmten Eigenschaften versehen werden, können mittels der Referenzobjekte bestimmte Informationen codiert werden. So kann z.B. durch die Position und die Anordnung der Referenzobjekte eine feste Position an der Fahrstrecke codiert werden. Der Sensor 13 kann durch Entfernungs- und Winkelmessung bezüglich dieser Referenzobjekte seine eigene Position und damit die Position des Fahrzeugs 11 auf der Fahrstrecke mit hoher Genauigkeit bestimmen, sobald die Referenzobjekte als solche erkannt und die von diesen codierten Informationen decodiert sind.

Alternativ oder zusätzlich ist es auch möglich, mit Hilfe einer vorhandenen Fahrbahnbegrenzung Informationen dadurch zu codieren, daß auf der Fahrbahnbegrenzung Referenzobjekte in Form von Reflexionsmarken, z.B. Folienstreifen, unterschiedlicher Reflektivität angebracht werden. Der Sensor 13 ermittelt bei der Abtastung der Umgebung durch die Entfernungs- und Winkelmessung bezüglich der Referenzobjekte oder Reflexionsmarken nicht nur seine Position, sondern kann außerdem die mittels der Reflexionsmarken codierten Informationen "lesen".

Die auf diese Weise während der Fahrt durch Decodieren der an der Fahrstrecke angebrachten Informationen ermittelte Fahrzeugposition kann für grundsätzlich beliebige Zwecke weiterverarbeitet und z.B. zur Fahrzeugführung eingesetzt und/oder an eine Leitzentrale weitergegeben werden.

Die entlang der Fahrstrecke verteilten Codes können während einer dem Normalbetrieb vorausgehenden Einlernfahrt vollautomatisch erkannt und abgespeichert und auf diese Weise eingelernt werden.

Erfindungsgemäß können nicht nur Positionsinformationen, sondern grundsätzlich beliebige Informationen codiert werden.

Um eine genaue Positionsbestimmung auch zwischen zwei aufeinanderfolgenden Codierungsstellen an der Fahrstrecke zu ermöglichen, kann beispielsweise auf die Anzahl der Umdrehungen zumindest eines der Fahrzeugräder zurückgegriffen werden. So können beispielsweise immer beginnend an einem Referenzobjekt, mit dem eine Position codiert wird, die Radumdrehungen gezählt und in eine seit diesem Referenzobjekt zurückgelegte Strecke umgerechnet werden. Auf diese Weise ist zu jedem Zeitpunkt während der Fahrt eine exakte Positionsbestimmung möglich.

Die Erfindung ermöglicht des weiteren eine Positionierung von Fahrzeugen. Beispielsweise bei Einfahrt in einen Haltestellenbereich kann eine exakte Fahrzeugpositionierung in Längsrichtung relativ zu einem Bahnsteig erforderlich sein, um eine möglichst große Anzahl von Fahrzeugen gleichzeitig am Bahnsteig zum Ein- und Aussteigen von Personen unterzubringen. Mit Hilfe von bekannter Referenzobjekten, wie sie z.B. vorstehend erläutert wurden, können beispielsweise durch eine reflexionsbasierende Codierung von Positionsinformationen einzelne Haltezonen am Bahnsteig markiert und dadurch mittels der an den Fahrzeugen 11 angebrachten Sensoren 13 erkannt werden. Auf diese Weise kann z.B. das automatische Anhalten mehrerer Fahrzeuge durch das Vorsehen von Codierungen im Seitenbereich und durch die Einhaltung eines vorgegebenen Mindestabstands zum jeweils vorausfahrenden Fahrzeug realisiert werden.

Ferner können durch eine Positionscodierung, wie sie z.B. vorstehend beschrieben wurde, die verschiedensten Fahrmanöver durchgeführt werden, wie beispielsweise im Bereich von Ein- und Ausfahrten oder in sogenannten Weichenbereichen voll- oder teilautomatische Fahrstreifenwechsel, Einfahrt- und Ausfahrtvorgänge sowie Abbiegevorgänge. Der Weg, den das Fahrzeug einschlagen soll, d.h. die vom Fahrzeug zu beschreibende Spur, kann beispielsweise durch eine Zielangabe eines Fahrzeuginsassen oder von einer Leitzentrale vorgegeben werden.

### Bezugszeichenliste

- 11: Fahrzeug
- 13: Sensor, Laserscanner
- 15: Vorbereich
- 17: Seitenbereich
- 19: Seitenbereich
- 21: Abtastebene
- 23: Fahrbahn
- 25: Fahrzeugunterseite
- 27: Referenzobjekt, Begrenzungsobjekt
- 28: Fahrbahnbegrenzung
- 29: Identifikationsobjekt
- 31: Steuereinrichtung
- 33: Fahrzeugrechner
- 35: Fahrstreifen
- 37: Einfahrtbereich

## Patentansprüche

1. Verfahren zur Führung von Kraftfahrzeugen, bei dem
- mittels wenigstens eines an einem Fahrzeug (11) angebrachten optoelektronischen Sensors (13) der in Fahrtrichtung vor dem Fahrzeug liegende Vorbereich (15) und bezogen auf die Fahrzeuggeschwindigkeit im wesentlichen gleichzeitig wenigstens ein seitlich des Fahrzeugs (11) gelegener Seitenbereich (17, 19) abgetastet wird, und
- das Fahrzeug (11) in Abhängigkeit von durch die Abtastung des Vorbereiches (15) und des Seitenbereiches (17, 19) gewonnenen Informationen geführt wird.

2. Verfahren nach Anspruch 1,
**dadurch gekennzeichnet,**
**daß** als optoelektronischer Sensor ein Laserscanner (13) verwendet wird, insbesondere ein Entfernungen und Winkel messender Laserscanner, der in zumindest einer Abtastebene (21) zu jedem Entfernungswert einen auf eine Sensorachse bezogenen Winkelwert liefert.

3. Verfahren nach Anspruch 1 oder 2,
**dadurch gekennzeichnet,**
**daß** der Vorbereich (15) und der Seitenbereich (17, 19) in einer Höhe abgetastet werden, die etwa in dem Bereich zwischen den von der Fahrbahn (23) einerseits und der Fahrzeugunterseite (25) andererseits definierten Ebenen liegt, und/oder
**daß** wenigstens ein an der Unterseite (25) des Fahrzeugs (11) und insbesondere bezogen auf die Fahrzeugbreite etwa mittig angebrachter Sensor (13) insbesondere in einer Überkopfanordnung mit an der tiefsten Stelle befindlicher Strahlungsumlenkeinrichtung verwendet wird, insbesondere wenigstens ein im Bereich der Vorderachse, bevorzugt unmittelbar hinter der Vorderachse des Fahrzeugs (11) angebrachter Sensor (13).

4. Verfahren nach einem der vorhergehenden Ansprüche,
**dadurch gekennzeichnet,**
**daß** Informationen über das Vorhandensein oder Nichtvorhandensein voraus- und/oder nebenherfahrender Fahrzeuge (11) gewonnen werden, und/oder daß Informationen über das Vorhandensein oder Nichtvorhandensein von aus dem Seitenbereich (17, 19) in den Vorbereich (15) eindringenden Fahrzeugen gewonnen werden, und/oder daß Informationen über die Lage des Fahrzeugs (11) relativ zu voraus- und/oder nebenherfahrenden Fahrzeugen (11), insbesondere über den Abstand, den Seitenversatz und/oder den Winkel zwischen den Fahrzeuglängsachsen gewonnen werden, und/oder
**daß** Informationen über die Geschwindigkeit des Fahrzeugs (11) relativ zu voraus- und/oder nebenherfahrenden Fahrzeugen (11) gewonnen werden.

5. Verfahren nach einem der vorhergehenden Ansprüche,
**dadurch gekennzeichnet,**
**daß** Informationen über die Lage des Fahrzeugs (11) relativ zu die Fahrbahn (23) begrenzenden oder die Fahrbahnbegrenzung wiedergebenden Begrenzungsobjekten (27), insbesondere über den seitlichen Abstand des Fahrzeugs (11) zur Fahrbahnbegrenzung und/oder den Winkel zwischen der Fahrbahnbegrenzung und der Fahrzeuglängsachse, gewonnen werden, und/oder
**daß** Informationen über die Geschwindigkeit des Fahrzeugs (11) relativ zu die Fahrbahn begrenzenden oder die Fahrbahnbegrenzung wiedergebenden Begrenzungsobjekten (27) gewonnen werden.

6. Verfahren nach einem der vorhergehenden Ansprüche,
**dadurch gekennzeichnet,**
**daß** das Fahrzeug (11) innerhalb eines zumindest zum Teil von volloder teilautomatisch geführten oder selbstfahrenden Fahrzeugen gebildeten Fahrzeugverbandes insbesondere in einem Folgefahrtoder Shuttlebetriebsmodus geführt wird, und/oder
**daß** das Fahrzeug (11) zum Einfädeln in einen und/oder zum Ausscheren aus einem zumindest zum Teil von voll- oder teilautomatisch geführten oder selbstfahrenden Fahrzeugen gebildeten Fahrzeugverband geführt wird.

7. Verfahren nach einem der vorhergehenden Ansprüche,
**dadurch gekennzeichnet,**
**daß** das Fahrzeug (11) zur Durchführung von Fahrstreifenwechseln, Einfahrtvorgängen, Ausfahrtvorgängen und/oder Abbiegevorgängen geführt wird, und/oder
**daß** das Fahrzeug (11) auf einer Rundfahrstrecke geführt wird, insbesondere zum Transport von Personen und/oder Gegenständen.

8. Verfahren nach einem der vorhergehenden Ansprüche,
**dadurch gekennzeichnet,**
**daß** die gewonnenen Informationen daraufhin untersucht werden, ob sich im Vorbereich (15) Hindernisse, insbesondere Personen und/oder Gegenstände, befinden, wobei bevorzugt die Geschwindigkeit des Fahrzeugs (11) relativ zu im Vorbereich (15) befindlichen Hindernissen bestimmt wird, und/oder
**daß** die gewonnenen Informationen daraufhin untersucht werden, ob sich im Vorbereich (15) und/oder im Seitenbereich (17, 19) die Fahrbahn (23) begrenzende oder die Fahrbahnbegrenzung wiedergebende Begrenzungsobjekte (27) befinden, und/oder
**daß** anhand von die Fahrbahn (23) begrenzenden oder die Fahrbahnbegrenzung wiedergebenden Begrenzungsobjekten (27) der Fahrbahnverlauf bestimmt wird, insbesondere einschließlich von Ein- und/oder Ausfädelbereichen, Ein- und/oder Ausfahrten, Kurvenein- und/oder -ausfahrten und/oder Kreuzungsbereichen.

9. Verfahren nach einem der vorhergehenden Ansprüche,
**dadurch gekennzeichnet,**
**daß** die gewonnenen Informationen daraufhin untersucht werden, ob sich im Vorbereich (15) und/oder im Seitenbereich (17, 19) bekannte Objekte befinden, wobei insbesondere
als bekannte Objekte an Fahrzeugen (11) angebrachte Identifikationsobjekte (29) insbesondere mit bekannter Anbauposition, Anordnung, Form, Größe und/oder Beschaffenheit, insbesondere Reflektivität, vorgesehen werden, und/oder
als bekannte Objekte die Fahrbahn (23) begrenzende oder die Fahrbahnbegrenzung wiedergebende Begrenzungsobjekte (27) insbesondere mit bekannter Position, Anordnung, Form, Größe und/oder Beschaffenheit, insbesondere Reflektivität, vorgesehen werden.

10. Verfahren nach Anspruch 9,
**dadurch gekennzeichnet,**
**daß** als bekannte Objekte ortsfeste Referenzobjekte (27) vorgesehen werden, die durch ihre Position, Anordnung, Form, Größe und/oder Beschaffenheit, insbesondere Reflektivität, für die Fahrzeugführung verwendbare und insbesondere zur Positionsbestimmung und/oder Fahrzeugpositionierung dienende Informationen codieren, wobei insbesondere
die Referenzobjekte (27) als die Fahrbahn (23) begrenzende oder die Fahrbahnbegrenzung wiedergebende Begrenzungsobjekte verwendet werden, und/oder
die Fahrbahn (23) begrenzende oder die Fahrbahnbegrenzung wiedergebende Begrenzungsobjekte (27) als Träger für die Referenzobjekte verwendet werden.

11. Verfahren nach Anspruch 9 oder 10,
**dadurch gekennzeichnet,**
**daß** mittels der bekannten Objekte, insbesondere der fahrzeugfesten Identifikationsobjekte (29), Informationen über die Geschwindigkeit und/oder die Lage des Fahrzeugs (11) relativ zu vorausfahrenden Fahrzeugen (11) gewonnen werden, insbesondere über den Abstand, den Seitenversatz und/oder den Winkel zwischen den Fahrzeuglängsachsen, und/oder
**daß** mittels der bekannten Objekte, insbesondere der fahrzeugfesten Identifikationsobjekte (29), Informationen über in Fahrtrichtung vor dem Fahrzeug (11) liegende Steigungen und/oder Gefälle gewonnen werden, wobei insbesondere
ein aus dem Sichtbereich des Sensors (13) nach oben verschwindendes Identifikationsobjekt (29) als Steigung und/oder ein nach unten verschwindendes Identifikationsobjekt (29) als Gefälle gewertet wird.

12. Verfahren nach einem der Ansprüche 9 bis 11,
**dadurch gekennzeichnet,**
**daß** mittels der bekannten Objekte, insbesondere der ortsfesten Referenzobjekte (27), die Position des Fahrzeugs (11) insbesondere in einem ortsfesten Koordinatensystem bestimmt wird, und/oder
**daß** mittels der bekannten Objekte, insbesondere der ortsfesten Referenzobjekte (27), das Fahrzeug (11) positioniert wird, insbesondere relativ zu einem Haltestellen- und/oder Bahnsteigbereich.

13. Verfahren nach einem der vorhergehenden Ansprüche,
**dadurch gekennzeichnet,**
**daß** zwischen zwei bevorzugt unmittelbar aufeinanderfolgenden bekannten Objekten, insbesondere Referenzobjekten, die Position des Fahrzeugs (11) unter Verwendung der Anzahl der Umdrehungen zumindest eines der bevorzugt nicht-angetriebenen Fahrzeugräder seit dem ersten bekannten Objekt bestimmt wird, und/oder
**daß** entlang einer Fahrstrecke vorgesehene und insbesondere von bekannten Referenzobjekten (27) gebildete Codes im Rahmen einer dem Normalbetrieb vorausgehenden Einlernfahrt eingelernt werden.
